# EUROPEAN PATENT APPLICATION

(11) **EP 2 696 293 A1**
(43) Date of publication of application: **12.02.2014**
(21) Application number: 12195603.1
(22) Date of filing: 05.12.2012
(51) Int. Cl.: G06F 13/40, H05K 7/14

(54) **Stacking electronic system**

(30) Priority: 08.08.2012 TW 101128631
(71) Applicant: Acer Incorporated, New Taipei City 221 (TW)
(72) Inventor: Yeung, Sip Kim, 221 New Taipei City (TW)
(74) Representative: Chamberlain, Alan James

(57) **Abstract**

A stacking electronic system including a first master device, a second master device having a first connector, a second connector, and at least one slave device having a third connector is provided. The second and the third connectors have an error-proofing structure corresponding to each other, such that the first master device is structurally connected to the second master device to control the slave device directly.

## Description

### CROSS-REFERENCE TO RELATED APPLICATION

This application claims the priority benefit of Taiwan application serial no. 101128631, filed on August 8, 2012. The entirety of the above-mentioned patent application is hereby incorporated by reference herein and made a part of this specification.

### BACKGROUND

### Field of the Invention

The invention is related to an electronic system and more particularly, to an electronic system which stacks a plurality of electronic devices.

### Description of Related Art

With the progress of technology, the functions of computers become more diversified, and a wide variety of peripheral equipment continues to be innovated and released. To allow users to enhance the performance of the computer or to expand the functions of the computer conveniently, bus slots such as an accelerated graphics port (AGP), a peripheral component interconnect (PCI) and a PCI express (PCI-E) are usually disposed on the main board of the computer, so that the users may insert expansion cards such as a display card, a sound card and a network card. In addition, expansion interfaces such as a firewire and a universal serial bus (USB) are also disposed on the host computer to allow the users to connect external devices like external hard drives and printers.

Intel Corporation (USA) introduces a brand-new Thunderbolt interface which combines the techniques of PCI-E and display ports and allows data transmission and video streaming to be carried out in one cable at the same time. The Thunderbolt transmission technique uses the same cable for data transmission and video streaming respectively. This allows the computer and the peripheral equipment to transmit data in a traffic of 10 Gigabytes (GBs) per second. In addition, the bandwidth provided by the Thunderbolt transmission technique allows a plurality of high-speed devices to be connected in series in a daisy-chain way without using hubs or switches.

However, in the daisy-chain way of serial connection, the host which serves as a terminal has to be disposed with a Thunderbolt interface port and a Thunderbolt controller, and relevant devices for subsequent serial connection also require the disposition of two Thunderbolt interface ports or more. And since each Thunderbolt interface has two channels (for data transmission and video streaming), a Thunderbolt controller supporting 4 channels has to be disposed in these relevant devices, which virtually increases manufacturing costs of the device.

However, currently, the two channels of the Thunderbolt interface are only for data transmission and video streaming, respectively, and do not support channel aggregation, thereby limiting transmission performance. When a relevant device connected in serial by the users does not include a display function, the channel for transmitting video streaming is idle, which causes the Thunderbolt interface port and the Thunderbolt controller disposed at a high cost to provide only half of the transmission performance, thereby causing a waste of resources.

In addition, the daisy-chain serial structure does not allow two master devices to coexist, and only a single host device is allowed to transmit data with other devices in serial connection, which also restricts the range of application of the Thunderbolt device.

### SUMMARY OF THE INVENTION

The invention provides a stacking electronic system which uses an error-proofing structure of a connector to make a second master device able to be structurally connected only between a first master device and a slave device, so that the first master device conveniently controls the slave device through structural connection or remote control.

An embodiment of the invention provides a stacking electronic system including a first master device, a second master device and at least one slave device. The second master device has a first connector and a second connector. The slave device has a third connector. The second connector and the third connector have an error-proofing structure corresponding to each other, such that the first master device is structurally connected to the second master device to control the slave device directly.

In an embodiment of the invention, an input/output (I/O) expansion device having a fourth connector is further included. The first connector and the fourth connector have an error-proofing structure corresponding to each other. When the first master device is connected to the I/O expansion device, the first master device controls the second master device and the slave device through the I/O expansion device.

In an embodiment of the invention, the second connector has a recess, and the third connector has a protrusion. The protrusion fits the recess to form the error-proofing structure, so that the second connector is able to be connected only to the third connector.

In an embodiment of the invention, the first connector has a protrusion, and the fourth connector has a recess. The protrusion fits the recess to form the error-proofing structure, so that the first connector is able to be connected only to the fourth connector.

In an embodiment of the invention, the stacking electronic device includes a plurality of slave devices. Each of the slave devices includes the third connector and a fifth connector, wherein the fifth connector is of the same type as the second connector, so that one of the slave devices is connected to the third connector of another slave device through the fifth connector.

In an embodiment of the invention, the first to the fifth connectors are universal serial bus connectors, respectively.

In an embodiment of the invention, the second master device further has a first network connection port and a sixth connector electrically connected to each other. The I/O expansion device further has a second network connection port and a seventh connector electrically connected to each other. When the second master device is structurally connected to the I/O expansion device, the sixth connector is connected to the seventh connector, so that the first network connection port and the second network connection port are electrically connected. The first master device transmits network signals to or receives the network signals from peripheral devices through the first or the second network connection ports.

In an embodiment of the invention, the sixth and the seventh connectors are universal serial bus connectors, respectively.

In an embodiment of the invention, the first master device is a terminal device.

In an embodiment of the invention, the second master device is a cloud server.

Based on the above, in the embodiments of the invention, with the error-proofing structures between the connectors, the second master device of the stacking electronic system is able to be structurally connected only between the I/O expansion device and the slave devices, so that the first master device is able to be structurally connected to the I/O expansion device, perform remote control through the second master device, or control the slave devices by ways of structurally connecting the second master device.

In order to make the aforementioned features and advantages of the invention more comprehensible, embodiments accompanying figures are described in detail below.

### BRIEF DESCRIPTION OF THE DRAWINGS

The accompanying drawings are included to provide further understanding and are incorporated in and constitute a part of this specification. The drawings illustrate exemplary embodiments and, together with the description, serve to explain the principles of the invention.

Fig. 1 is a schematic view of a stacking electronic system according to an embodiment of the invention.

Fig. 2 is a block diagram of a portion of devices in the stacking electronic system of Fig. 1.

Figs. 3 to 5 are respectively assembly schematic views of a portion of the devices in the stacking electronic system of Fig. 1.

Figs. 6 to 8 are assembly schematic views respectively illustrating a portion of devices according to another embodiment of the invention.

### DESCRIPTION OF EMBODIMENTS

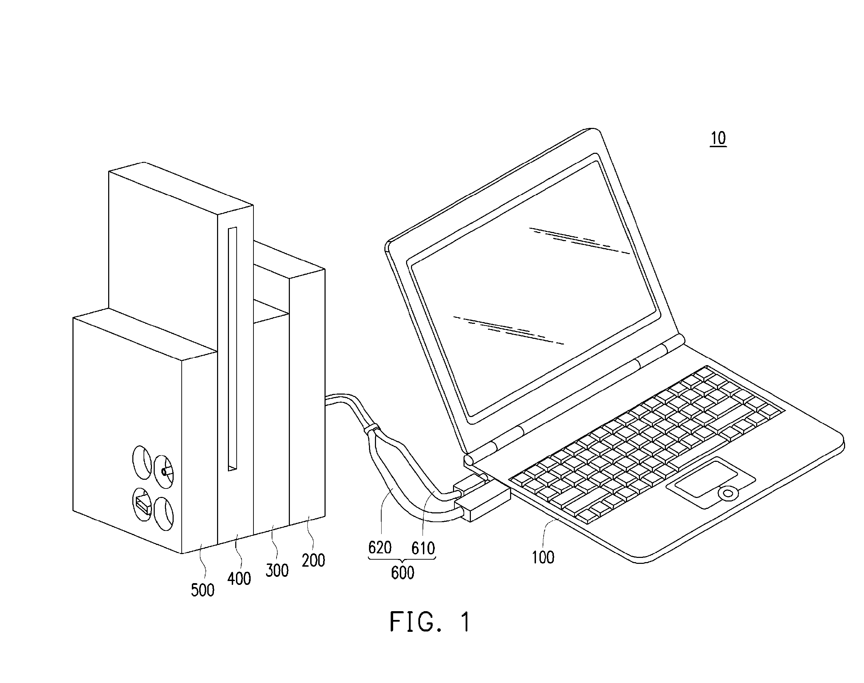

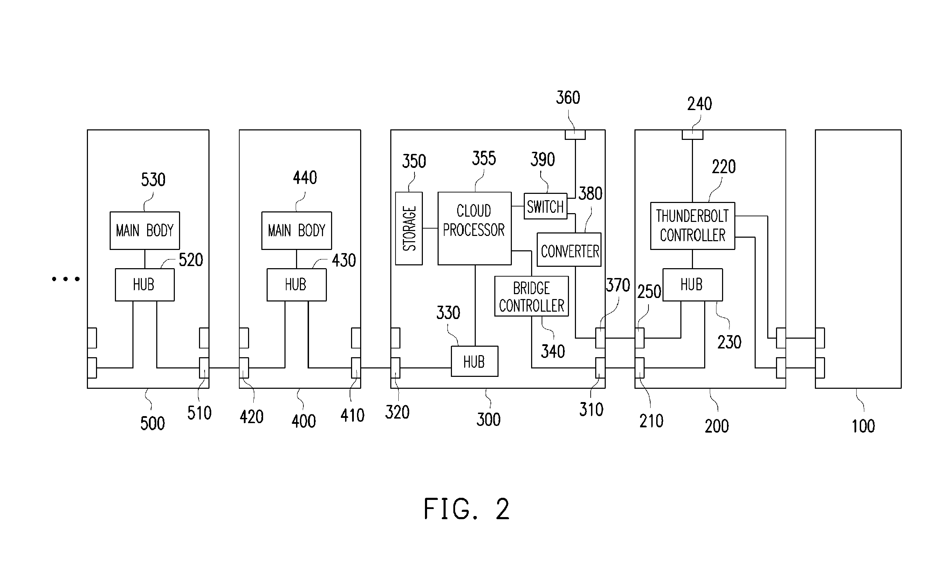

Fig. 1 is a schematic view of a stacking electronic system according to an embodiment of the invention. Fig. 2 is a block diagram of a portion of devices in the stacking electronic system of Fig. 1 for illustrating connection relationship of relevant components. Referring to Figs. 1 and 2, in the present embodiment, a stacking electronic device 10 includes a first master device 100, an input/output (I/O) expansion device 200, a second master device 300 and two slave devices 400 and 500.

Herein, the first master device 100 is a terminal device, such as a desktop computer, a laptop computer, or a work station. The I/O expansion device 200 is composed of an I/O unit (not shown) and a graphics processing unit (not shown), for example. The second master device 300 is a cloud server composed of, for example, a network module which supports 802.11x wireless communication standard of Institute of Electrical and Electronics Engineers (IEEE) or the third-generation (3G) mobile protocol to allow other devices on the network to access data on the slave devices 400 and 500 to which the second master device 300 is connected in serial through the network. The slave devices 400 and 500 are, for example, storage devices or non-storage devices such as optical disc drives or hard disks. Types and numbers of the slave devices 400 and 500 are not limited to the above descriptions; anything that may serve as an expansion function, such as a memory, a memory card, a display or a burner, are applicable in the present embodiment.

In the present embodiment, the first master device 100 and the I/O expansion device 200 are adapted to be connected to each other through a Thunderbolt interface. As shown in Fig. 1, the first master device 100 is connected to the I/O expansion device 200 through a cable 600 (including a power cable 610 and a Thunderbolt interface cable 620), so that the first master device 100 may use the I/O unit and the graphics processing unit of the I/O expansion device 200 as devices of expansion functions.

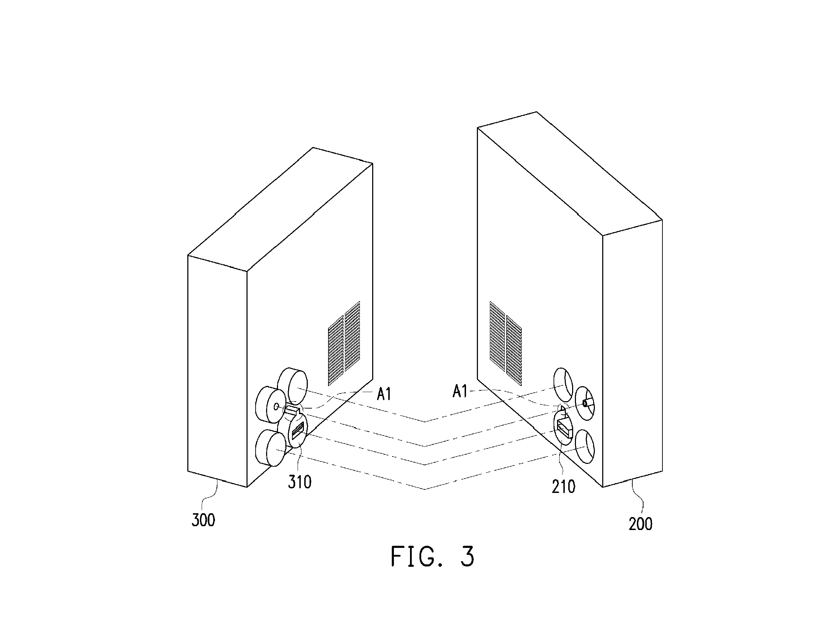

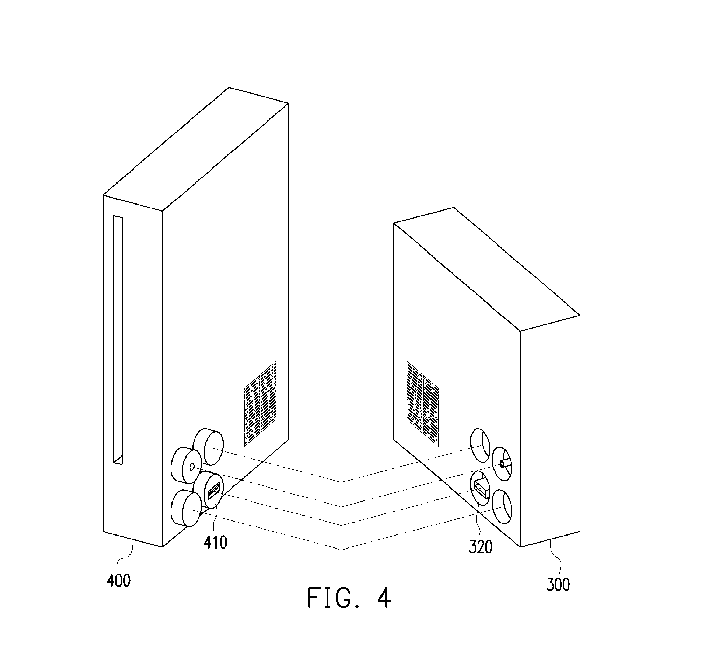

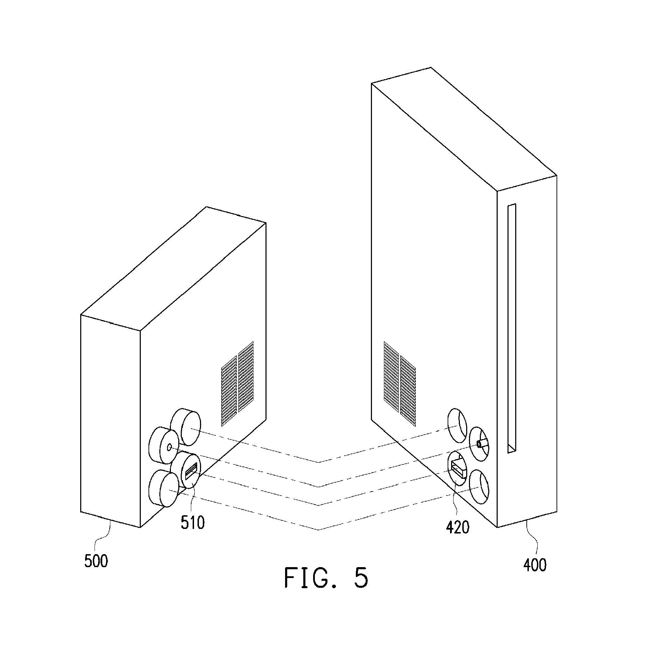

Furthermore, Figs. 3 to 5 are respectively assembly schematic views of a portion of the devices in the stacking electronic system of Fig. 1. Referring to Figs. 2 to 5, in the present embodiment, the I/O expansion device 200 has a connector 210. The second master device 300 has connectors 310 and 320. The slave device 400 has connectors 410 and 420, and the slave device 500 has a connector 510.

More specifically, referring to Fig. 2, the I/O expansion device 200 further has a Thunderbolt controller 220 and a hub 230 coupled to the Thunderbolt controller 220, and the connector 210 is coupled to the hub 230. The second master device 300 further has a cloud processor 355, a hub 330 coupled to the cloud processor 355, a bridge controller 340 and a storage 350, wherein the bridge controller 340 judges whether the second master device 300 serves as a master device or a slave device.

The storage 350 is, for example, a memory or a hard disk for storing programs or data executed by the cloud processor 355. The connector 310 is coupled to the bridge controller 340, and the connector 320 is coupled to the hub 330. The slave devices 400 and 500 further respectively have hubs 430 and 520 and main bodies 440 and 530, and coupling relationship thereof is as illustrated in Fig. 2, so that the first master device 100, the I/O expansion device 200 and the second master device 300 control the main bodies 440 and 530 of the slave devices 400 and 500 through the hubs 230, 330, 430 and 520 after the connectors 210, 310, 320, 410, 420 and 510 are respectively and correspondingly connected.

As illustrated in Figs. 1 and 2, when the first master device 100, the I/O expansion device 200 and the second master device 300 are sequentially connected to the slave devices 400 and 500, a user may use the first master device 100 to control devices 200, 300, 400 and 500 connected subsequent to the first master device 100 and to access data on the main bodies 440 and 530. In addition, the connectors and the hubs all meet specifications of universal serial buses (USBs) or specifications of other transmission interfaces and are able to transmit data.

It should be noted that, referring to Figs. 2 to 5, to allow the above-mentioned devices to be connected to one another successively in a sequence as illustrated in Fig. 2, the connector 210 and the connector 310 of the present embodiment have an error-proofing structure A1 corresponding to each other, so that the connector 210 is able to be connected correspondingly only to the connector 310, wherein the connector 310 has a protrusion, the connector 210 has a recess, and the protrusion fits the recess to form the error-proofing structure A1. Accordingly, when the second master device 300 is intended to be connected between the slave devices 400 and 500, the protrusion of the connector 310 interferes with the connector 420 and prevents a successful connection.

In contrast, in addition to being connected to the second master device 200, the slave devices 400 and 500 may also be connected to the I/O expansion device 200. In other words, in the connection sequence of the stacking electronic system 10, the error-proofing structure A1 restricts the second master device 300 to be capable of being located only between the I/O expansion device 200 and the slave device 400 but does not influence the connection relationship between the slave devices 400 and 500 and the I/O expansion device 200.

For example, when the user has only the I/O expansion device 200 and does not have the second master device 300 (i.e., when the second master device 300 is omitted in Fig. 2), the user may connect the slave devices 400 and 500 sequentially to the I/O expansion device 200 successfully. When the first master device 100 and the I/O expansion device 200 are connected to each other, the first master device 100 controls the slave devices 400 and 500 through the I/O expansion device 200.

In addition, when the user has only the second master device 300 and does not have the I/O expansion device 200 (i.e., when the I/O expansion device 200 is omitted in Fig. 2), the user may connect the slave devices 400 and 500 sequentially to the second master device 300 successfully. When the first master device 100 and the second master device 300 are connected to each other, the first master device 100 controls the slave devices 400 and 500 through the second master device 300. Furthermore, when the user removes the first master device 100 from the second master device 300, the user may still use the network function of the second master device 300 to remotely control the slave devices 400 and 500.

On the other hand, when the user has both the I/O expansion device 200 and the second master device 300, the error-proofing structure A1 is used to restrict the second master device 300 to be capable of being connected only between the I/O expansion device 200 and the slave device 400. Therefore, the user may physically connect the first master device 100 to the I/O expansion device 200 to control the second master device 300 and the slave devices 400 and 500 subsequent to the first master device 100, and the user may also use the network function of the second master device 300 to remotely control the slave devices 400 and 500 after the first master device 100 is removed from the second I/O expansion device 200.

Based on the above, the present embodiment uses the error-proofing structure A1 between the connectors 210 and 310 to restrict the connection sequence of the second master device 300, so that the slave devices 400 and 500 are connected subsequent to the second master device 300 or the I/O expansion device 200; therefore, when the first master device 100 is used, the first master device 100 may control every slave device 400 and 500 without missing any one by controlling modes of structural physical connection or remote connection.

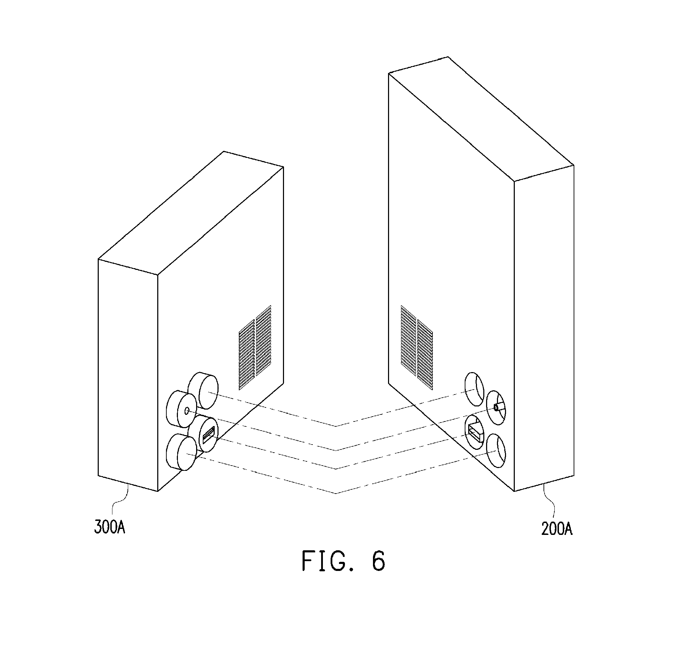

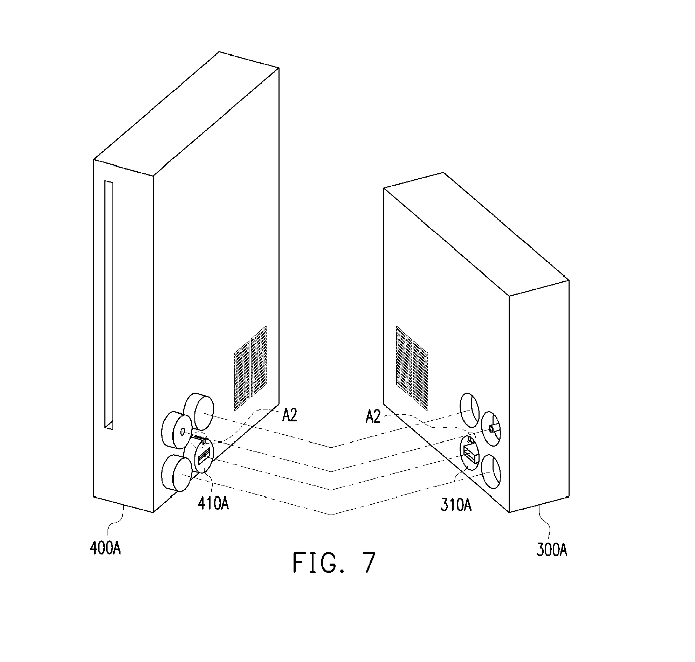

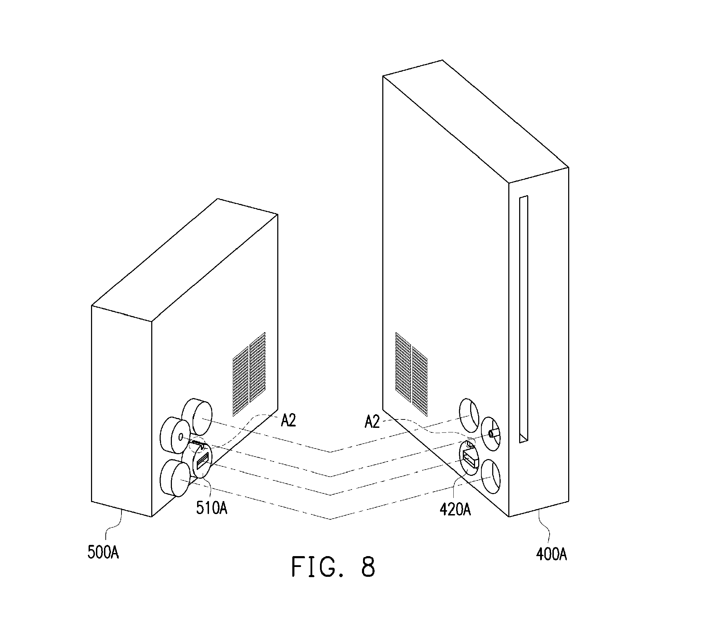

However, the invention does not limit types of the error-proofing structure. Figs. 6 to 8 are assembly schematic views respectively illustrating a portion of devices according to another embodiment of the invention. Referring to Figs. 6 to 8, in the present embodiment, connector 310A of a second master device 300A and connector 410A of a slave device 400A have an error-proofing structure A2, wherein the connector 310A has a protrusion, the connector 410A has a recess, and the protrusion fits the recess to form the error-proofing structure A2. Furthermore, connectors 420A and 510A of the slave devices 400A and 500A also have an error-proofing structure A2. In contrast, connectors between the I/O expansion device 200A and the second master device 300A do not have this error-proofing structure A2. Accordingly, the slave devices 400A and 500A may be subsequently connected to the second master device 300A or the I/O expansion device 200A selectively, but the second device 300A is not able to be subsequently connected to the slave devices 400A and 500A.

In light of the above, by disposing an error-proofing structure between the second master device 300A and the slave devices 400A and 500A, the present embodiment maintains a positional relationship that the second master device 300A is disposed between the I/O expansion device 200A and the slave device 400A.

Referring to Fig. 2 again, in the present embodiment, the second master device 300 further has a network connection port 360, a connector 370, a converter 380 and a switch 390 coupled to one another, wherein the switch 390 is coupled between the network connection port 360 and the cloud processor 355, and the converter 380 is coupled between the switch 390 and the connector 370. Furthermore, the I/O expansion device 200 further has a network connection port 240 and a connector 250 electrically connected to each other. When the second master device 300 is structurally connected to the I/O expansion device 200, not only the connectors 210 and 310 are connected to each other, but the connectors 250 and 370 are also connected to each other, so that the network connection ports 240 and 360 are electrically connected.

Accordingly, whether the first master device 100 is solely connected to the I/O expansion device 200 or the second master device 300, the first master device 100 may transmit network signals to or receive the network signals from peripheral devices through the network connection ports 240 or 360. When the first master device 100, the I/O expansion device 200 and the second master device 300 are sequentially connected as illustrated in Fig. 2, the user may also choose to use the network connection ports 240 or 360 to transmit network signals to or receive the network signals from peripheral devices through the connection of the connectors 250 and 370 and the cooperation of the converter 380 and the switch 390. In other words, in the present embodiment, the first master device 100 and the second master device 200 are able to share the same one network connection path.

In summary of the above, in the embodiments of the invention, with the error-proofing structures between the connectors, the second master device of the stacking electronic system is able to be structurally connected only between the I/O expansion device and the slave devices, so that the first master device is able to be structurally connected to the I/O expansion device, perform remote control through the second master device, or control the slave devices by ways of structurally connecting the second master device.

Although the invention has been described with reference to the above embodiments, they are not intended to limit the invention. It is apparent to people of ordinary skill in the art that modifications and variations to the invention may be made without departing from the spirit and scope of the invention. In view of the foregoing, the protection scope of the invention will be defined by the appended claims.

## Claims

1. A stacking electronic system(10), comprising:
a first master device (100);
a second master device (300, 300A) having a first connector (310) and a second connector (310A, 320); and
at least one slave device (400, 400A) having a third connector (410A), wherein the second connector (310A) and the third connector (410A) have an error-proofing structure (A2) corresponding to each other, such that the first master device (100) is connected to the second master device (300, 300A) to control the slave device (400, 400A) directly.

2. The stacking electronic system (10)_according to claim 1, further comprising an input/output (I/O) expansion device (200) having a fourth connector (210), wherein the first connector (310) and the fourth connector (210) have an error-proofing structure (A1) corresponding to each other, and when the first master device (100) is connected to the I/O expansion device (200), the first master device (100) controls the second master device (300) and the slave device (400) through the I/O expansion device (200).

3. The stacking electronic system (10) according to claim 1, wherein the second connector (310A) has a protrusion, the third connector (410A) has a recess, and the protrusion fits the recess to form the error-proofing structure (A2), so that the second connector (310A) is able to be connected only to the third connector (410A).

4. The stacking electronic system (10) according to claim 2, wherein the first connector (310) has a protrusion, the fourth connector (210) has a recess, and the protrusion fits the recess to form the error-proofing structure, so that the first connector (310) is able to be connected only to the fourth connector (210).

5. The stacking electronic system according to claim 2, comprising a plurality of slave devices (400, 500), each of the slave devices (400, 500) comprising the third connector (410, 410A) and a fifth connector (420), wherein the fifth connector (420)is of the same type as the second connector (320), so that one of the slave devices (400, 500) is connected to the third connector (410, 410A) of another slave device (400, 500) through the fifth connector (420).

6. The stacking electronic system according to claim 5, wherein the first (310) to the fifth (420) connectors are universal serial bus connectors, respectively.

7. The stacking electronic system according to claim 2, wherein the second master device (300) further has a first network connection port (360) and a sixth connector (370) electrically connected to each other, the I/O expansion device (200) further has a second network connection port (240) and a seventh connector (250) electrically connected to each other, and when the second master device (300) is structurally connected to the I/O expansion device (200), the sixth connector (370) is connected to the seventh connector (250), so that the first network connection port (360) is electrically connected to the second network connection port (240), and the first master device (100) transmits network signals to or receives the network signals from peripheral devices through the first or the second network connection ports (360, 240).

8. The stacking electronic system according to claim 7, wherein the sixth and the seventh connectors ( 370, 250) are universal serial bus connectors, respectively.

9. The stacking electronic system according to claim 1, wherein the first master device (100) is a terminal device.

10. The stacking electronic system according to claim 1, wherein the second master device (300) is a cloud server.
